# EUROPÄISCHE PATENTANMELDUNG

(11) **EP 1 288 539 A2**
(43) Veröffentlichungstag der Anmeldung: **05.03.2003**
(21) Anmeldenummer: 02018293.7
(22) Anmeldetag: 26.08.2002
(51) Int. Cl.: F16J 15/32, F15B 15/14

(54) **Hydrozylinder**

(30) Priorität: 30.08.2001 DE 10142562
(71) Anmelder: HYDAC Technology GmbH, 66280 Sulzbach/Saar (DE)
(72) Erfinder: Hahmann, Wolfgang, Dr.-Ing., 47906 Kempen (DE)
(74) Vertreter: Patentanwälte Bartels und Partner

(57) **Zusammenfassung**

Die Erfindung betrifft einen Hydrozylinder mit einem Zylinderrohr (1), in dem ein Kolben (5) in Axialrichtung verschiebbar geführt ist, der durch an ihm vorgesehene Dichtelemente (13,15) gegenüber der Innenwand (3) des Zylinderrohres (1) abgedichtet ist, wobei zumindest ein Dichtelement (15) am Kolben (5) für eine zur Axialrichtung quer verlaufende Verschiebebewegung schwimmend gelagert ist und wobei als schwimmend gelagertes Dichtelement eine Ringscheibe (17) vorgesehen ist, die am Kolben (5) radial verschiebbar geführt ist. Dadurch, dass die Führung der Ringscheibe (17) einen die Kolbenstange (9) umgebenden mit dem Kolben (5) verbundenen Flanschring (35) aufweist, der die Ringscheibe (17) unter Bildung eines deren Verschiebebewegung ermöglichenden radialen Spieles in Axialrichtung durchgreift und der mit einer an seinem Flanschrand (39) befindlichen, in einer Radialebene liegenden Fläche den radial innenliegenden Bereich der Ringscheibe (17) übergreift, ist ein Hydrozylinder geschaffen, bei dem auch bei Auftreten hoher zwischen Kolben und Zylinderrohr wirksamer Querkräfte eine betriebssichere Abdichtung gewährleistet ist.

## Beschreibung

Die Erfindung bezieht sich auf Hydrozylinder mit einem Zylinderrohr, in dem ein Kolben in Axialrichtung verschiebbar geführt ist, der durch an ihm vorgesehene Dichtelemente gegenüber der Innenwand des Zylinderrohres abgedichtet ist, wobei zumindest ein Dichtelement am Kolben für eine zur Axialrichtung quer verlaufende Verschiebebewegung schwimmend gelagert ist, und wobei als schwimmend gelagertes Dichtelement eine Ringscheibe vorgesehen ist, die am Kolben radial verschiebbar geführt ist.

Hydrozylinder der genannten Art finden in der Technik auf den verschiedensten Gebieten verbreitete Anwendung. Beispielsweise kann es sich hierbei um Arbeitszylinder für den hydraulischen Antrieb beweglicher Maschinenelemente oder für die Erzeugung von Stellkräften handeln, um Federungszylinder und vieles mehr. Im Betrieb werden dynamisch belastete Zylinder auch wenn sie kardanisch befestigt sind, mit Querkräften belastet. Wenn derartige Zylinder auf beweglichen Trägern angeordnet sind, beispielsweise an Fahrzeugteilen angebracht sind, können sich aufgrund von Querbeschleunigten Querkräfte beträchtlicher Größe ergeben.

Die vom Kolben hierbei auf das Zylinderrohr ausgeübten Querkräfte können elastische bis plastische Verformungen an den Abdichtflächen zwischen Kolben und Zylinderrohr hervorrufen, die soweit führen können, dass die in die Umfangsfläche des Kolbens eingebaute Kolbendichtung auf der der jeweiligen Abstützfläche gegenüberliegenden Seite des Kolbens den die Dichtfunktion sicherstellenden Kontakt zum Zylinderrohr verliert. Ein Druckmedium, dass dann durch den sich bildenden Spalt hindurch tritt, kann die Kolbendichtung beschädigen oder gar zerstören, so dass es zu einem Systemversagen kommen kann.

Durch die DE-U-73 17 707 ist eine Vorrichtung zum Abdichten eines nach Form und Größe veränderlichen Ringspaltes zwischen einem axial beweglichen, mit einer umlaufenden Nut versehen Körper, beispielsweise Kolben, und einem ihn umgebenden Rohr (beispielsweise Zylinderrohr) bekannt, wobei in der Nut mehrere gegeneinander bewegliche, je einen Sektor des Ringspaltes ausfüllende Dichtkörper angeordnet sind, die mittels Federkraft gegen die Innenwand des Rohres gepreßt sind. Dergestalt bilden die Dichtkörper einen Kranz aus, dessen Innendurchmesser um etwa die doppelte Breite des abzudichtenden Ringspaltes größer ist als der Innendurchmesser der Nut. Hierdurch wird erreicht, dass der Dichtkranz den Ringspalt auch dann überdeckt, wenn der Gegenstand bezogen auf die Umhüllung eine exzentrische Lage einnimmt. Ein gewisser Abstand zwischen den einzelnen Dichtkörpern gewährleistet darüber hinaus, dass diese durch gegenseitiges Verkanten sich etwaigen Einbeulungen oder sonstigen Abweichungen von der Kreisform des Zylinderrohres anpassen können. Die dahingehend bekannte Lösung findet insbesondere im Bereich der Kernkrafttechnologie Anwendung, wo die Schaffung einer temperatur- und strahlenbeständigen Dichtung notwendig ist und aus Sicherheitsgründen geboten erscheint. Gerade beim Auftreten der beschriebenen hohen Querkräfte, die zwischen Kolben und Zylinderrohr auftreten können, kann es jedoch durch einseitige Beaufschlagung des Federbandes, das die Rückstellfederkraft für die Dichtung liefert, zu einem Versagen der Abdichtung kommen.

Durch die US-A-3,336,033 ist ein gattungsgemäßer Hydrozylinder bekannt, mit einem Zylinderrohr, in dem ein Kolben in Axialrichtung verschiebbar geführt ist, der durch an ihm vorgesehene Dichtelemente gegenüber der Innenwand des Zylinderrohres abgedichtet ist, wobei zumindest ein Dichtelement am Kolben für eine zur Axialrichtung quer verlaufende Verschiebebewegung schwimmend gelagert ist, indem sich das Dichtelement vor dem Einbau in einer radial äußeren Position befindet und nach dem Einbau noch ein Luftspalt zwischen Kolben und Dichtung verbleibt. Auch die dahingehend bekannte Lösung ist gegenüber der Einleitung von Querkräften empfindlich, so dass ein dahingehendes Versagen nicht ausgeschlossen werden kann.

Ausgehend von diesem Stand der Technik liegt der Erfindung die Aufgabe zugrunde, einen Hydrozylinder zu schaffen, bei dem auch bei Auftreten hoher zwischen Kolben und Zylinderrohr wirksamer Querkräfte eine betriebssichere Abdichtung gewährleistet ist.

Bei einem Hydrozylinder der gattungsgemäßen Art ist diese Aufgabe erfindungsgemäß dadurch gelöst, dass die Führung der Ringscheibe einen die Kolbenstange umgebenden mit dem Kolben verbundenen Flanschring aufweist, der die Ringscheibe unter Bildung eines deren Verschiebebewegung ermöglichenden radialen Spieles in Axialrichtung durchgreift und der mit einer an seinem Flanschrand befindlichen, in einer Radialebene liegenden Fläche den radial innenliegenden Bereich der Ringscheibe übergreift.

Das am Kolben schwimmend gelagerte Dichtelement bleibt somit bei Auftreten von zwischen Kolben und Zylinderrohr wirkenden Querkräften von den Abstützkräften unbelastet, weil das quer zur Axialrichtung bewegliche Dichtelement Querverlagerung des Kolbens nicht mitmacht, sondern durch Relativbewegung gegenüber dem Kolben den Dichtspalt am Zylinderrohr konstant hält. Auch bei Querverlagerungen des Kolbens bleibt daher die Abdichtung erhalten.

Vorzugsweise ist das schwimmend gelagerte Dichtelement in Form der Ringscheibe am Kolben radial verschiebebar geführt. Bei einer vorteilhaften Ausführungsform befindet sich die Führung für die Scheibe an einer sich in einer Radialebene erstreckenden Endfläche des Kolbens, und an der umfänglichen Ringfläche der schwimmend gelagerten Scheibe ist eine Dichtungsanordnung zur Abdichtung gegenüber der Innenwand des Zylinderrohres angeordnet.

Bei dieser Dichtungsanordnung kann es sich um einen in einer umfänglichen Ringnut sitzenden, mehrteiligen Dichtring handeln, der einen zähelastischen Ringteil für die Anlage am Zylinderrohr und einen diesen vorspannenden gummielastischen Ringteil aufweist. Andere Dichtungsformen sind ebenso möglich.

Das erfindungsgemäß vorgesehene, zumindest eine schwimmend gelagerte Dichtelement kann am Kolben zusätzlich zu üblichen Kolbendichtungen vorgesehen sein, die je nach Anwendungs- oder Einsatzzweck dem Stand der Technik entsprechend angeordnet und ausgebildet sein können.

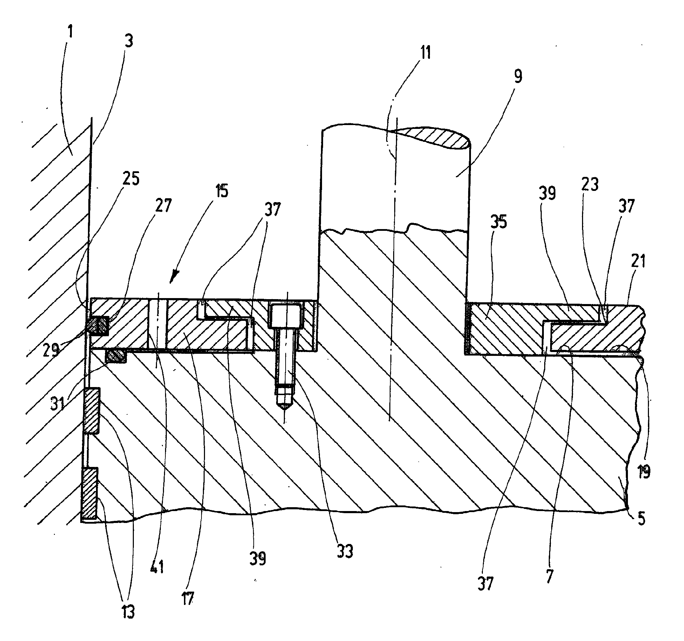

Nachstehend ist die Erfindung anhand eines in der Zeichnung dargestellten Ausführungsbeispieles im einzelnen erläutert.

Die einzige Fig. zeigt einen abgebrochen gezeichneten Teillängsschnitt nur des die erfindungswesentlichen Teile enthaltenden Bereiches eines Ausführungsbeispieles eines Hydrozylinders.

In der Zeichnung ist lediglich ein Teilabschnitt eines Zylinderrohres 1 des zu beschreibenden Ausführungsbeispieles des Hydrozylinders gezeigt, wobei die Innenwand des Zylinderrohres 1 mit 3 bezeichnet ist. Der im Zylinderrohr 1 geführte Kolben 5 weist an der in der Fig. zu sehenden Endfläche 7 eine mit dem Kolben 5 einstückige Kolbenstange 9 auf, die sich in Axialrichtung konzentrisch zur zentralen Längsachse 11 erstreckt. Die Endfläche 7 liegt in einer zur Längsachse 11 normalen Radialebene.

In einem axialen Abstand zur Endfläche 7 des Kolbens 5 sind zur Führung gegenüber der Innenwand 3 des Zylinderrohres 1 am Umfang des Kolbens 5 Führungselemente in Form üblicher Führungsbänder 13 vorgesehen, die in zugehörigen, in den Umfang des Kolbens 5 eingearbeiteten Nuten sitzen. Der Kolben 5 weist ein schwimmend gelagertes und als Ganzes mit 15 bezeichnetes Dichtelement auf. Dieses Dichtelement 15 ist in der Weise am Kolben 5 schwimmend gelagert, dass es, bezogen auf die Längsachse 11, am Kolben 5 radial verschiebbar ist.

Beim dargestellten Ausführungsbeispiel weist das schwimmend gelagerte Dichtelement 15 eine Ringscheibe 17 auf, die entlang der Endfläche 7 des Kolbens 5 verschiebbar ist. Bei der Ringscheibe 17 handelt es sich um eine flache Metallscheibe mit ebenen Seitenflächen 19 und 21, wobei in den radial innenliegenden Endabschnitt der Seitenfläche 21 eine Vertiefung 23 eingearbeitet ist. Die radial außenliegende oder umfangseitige Ringfläche 25 der Ringscheibe 17 weist eine in sie mittig eingearbeitete Ringnut 27 auf, in der eine Dichtungsanordnung 29 sitzt, die den Umfang der Ringscheibe 17 gegen die Innenwand 3 des Zylinderrohres 1 abdichtet. Beim dargestellten Beispiel handelt es sich bei dieser Dichtungsanordnung 29 um eine sogenannte Glyd-Dichtung, d.h. um einen mehrteiligen Dichtring, der einen zähelastischen Ringteil, der radial außenliegend angeordnet ist und an der Innenwand 3 anliegt, sowie einen diesen Ringteil vorspannenden, radial innenliegenden gummielastischen Ringteil aufweist (vgl. DE 41 40 833 C3).

Zur Abdichtung zwischen dem an die Dichtungsanordnung 29 angrenzenden Umfangsbereich der Ringscheibe 17 und der Endfläche 7 des Kolbens 5 ist eine zweite Dichtungsanordnung 31 vorgesehen, die in einer in die Endfläche 7 in geringem Radialabstand vom Umfang des Kolbens 5 eingearbeiteten Ringnut sitzt. Bei der Dichtungsanordnung 31 kann es sich um einen üblichen Dichtring mit rundem oder rechteckigem Querschnitt handeln.

Die Einrichtung zur schwimmenden Lagerung des Dichtelementes 15, d.h. die Anordnung zur radial verschiebbaren Führung der Ringscheibe 17 an der Endfläche 7 des Kolbens 5, weist einen mit diesem mittels Befestigungsschrauben 33 verbundenen Flanschring 35 auf, der die zentrale Öffnung der Ringscheibe 17 unter Bildung eines Spaltes 37 durchgreift, welcher so dimensioniert ist, daß er ein radiales Spiel für die Verschiebebewegung der Ringscheibe 17 zur Verfügung stellt. Der von der Kolbenstange 9 durchgriffene Flanschring 35 weist einen umfänglichen, radial vorspringenden Flanschrand 39 auf. Sowohl die von diesem übergriffene Fläche der Vertiefung 23 in der Ringscheibe 17 als auch die zugewandte Fläche des Flanschrandes 39 liegen in Radialebenen, die zur Ebene der Endfläche 7 parallel sind. Somit bilden diese Flächen eine Führung für die radiale Verschiebebewegung der Ringscheibe 17 relativ zum Kolben 5, wobei nur ein sehr geringes axiales Spiel vorhanden ist, so dass die Dichtungsanordnung 31 an der Endfläche 7 des Kolbens 5 in dem erforderlichen Abdichtungskontakt mit der Ringscheibe 17 ist. Andererseits ermöglicht die radiale Erstreckung des Spaltes 37 eine gewünschte radiale Relativbewegung zwischen dem schwimmend gelagerten Dichtelement 15, d.h. der Ringscheibe 17, und dem Kolben 5. Mindestens eine in der Ringscheibe 17 ausgebildete Durchgangsbohrung 41 stellt den Druckausgleich zwischen beiden Seitenflächen 19 und 21 der Ringscheibe 17 her, so dass sich nur eine geringe Druckbelastung für die Führung des schwimmend gelagerten Dichtelementes 15 im Betrieb ergibt.

Wenn im Betrieb Querkräfte, beispielsweise Beschleunigungskräfte, am Kolben 5 auftreten, deren Stärke ausreicht, um an einer Kolbenseite die in den Kolben 5 fest eingebauten Kolbendichtungen 13 oder die anliegenden Teile der Innenwand 3 des Zylinderrohres 1 so weit zu verformen, dass auf der gegenüberliegenden Seite eine Spaltbildung an den Kolbendichtungen 13 auftritt, die zu einem Durchströmen von Druckfluidum führen könnte, wird ein solches Durchströmen durch das schwimmend gelagerte Dichtungselement 15 verhindert, welches Querbewegungen des Kolbens 5 nicht mitmacht, so dass die Abdichtung an der Dichtungsanordnung 29 der schwimmend gelagerten Ringscheibe 17 beibehalten wird. Diese ist bezüglich ihres Außendurchmessers so dimensioniert, dass sich ihre umfängliche Ringfläche 25 in einem die optimale Dichtwirkung der Dichtungsanordnung 29 gewährleistenden geringen Abstand zur Innenwand 3 befindet. Aufgrund der schwimmenden Lagerung der Ringscheibe 17 bleibt dieser optimale Abstand unter allen auftretenden, am Kolben 5 wirkenden Belastungen über den gesamten Umfangsbereich konstant, so dass die Betriebssicherheit bei allen Betriebsbedingungen gewährleistet ist.

## Patentansprüche

1. Hydrozylinder mit einem Zylinderrohr (1), in dem ein Kolben (5) in Axialrichtung verschiebbar geführt ist, der durch an ihm vorgesehene Dichtelemente (13,15) gegenüber der Innenwand (3) des Zylinderrohres (1) abgedichtet ist, wobei zumindest ein Dichtelement (15) am Kolben (5) für eine zur Axialrichtung quer verlaufende Verschiebebewegung schwimmend gelagert ist und wobei als schwimmend gelagertes Dichtelement eine Ringscheibe (17) vorgesehen ist, die am Kolben (5) radial verschiebbar geführt ist, **dadurch gekennzeichnet, dass** die Führung der Ringscheibe (17) einen die Kolbenstange (9) umgebenden mit dem Kolben (5) verbundenen Flanschring (35) aufweist, der die Ringscheibe (17) unter Bildung eines deren Verschiebebewegung ermöglichenden radialen Spieles in Axialrichtung durchgreift und der mit einer an seinem Flanschrand (39) befindlichen, in einer Radialebene liegenden Fläche den radial innenliegenden Bereich der Ringscheibe (17) übergreift.

2. Hydrozylinder nach Anspruch 1, **dadurch gekennzeichnet, dass** die Ringscheibe (17) an einer sich in einer Radialebene erstreckenden Endfläche (7) des Kolbens (5) geführt ist und an ihrer umfänglichen Ringfläche (25) eine Dichtungsanordnung (29) zur Abdichtung gegenüber der Innenwand (3) des Zylinderrohres (1) aufweist.

3. Hydrozylinder nach Anspruch 2, **dadurch gekennzeichnet, dass** an der der Ringscheibe (17) zugekehrten Endfläche (7) des Kolbens (5) eine gegenüber der umfänglichen Ringfläche (25) der Scheibe (17) geringfügig radial nach innen versetzte, zweite Dichtungsanordnung (31) zur Abdichtung zwischen der anliegenden Seitenfläche (19) der Scheibe (17) und der Endfläche (7) des Kolbens (5) vorgesehen ist.

4. Hydrozylinder nach Anspruch 3, **dadurch gekennzeichnet, dass** zumindest die erste Dichtungsanordnung durch einen mehrteiligen Dichtring (29) gebildet ist, der einen zähelastischen Ringteil und einen ihn vorspannenden gummielastischen Ringteil aufweist.

5. Hydrozylinder nach einem der Ansprüche 1 bis 4, **dadurch gekennzeichnet, dass** die Ringscheibe (17) an der an die Kolbenstange (9) angrenzenden Endfläche (7) des Kolbens (5) angeordnet und von der Kolbenstange (9) durchgriffen ist.

6. Hydrozylinder nach Anspruch 5, **dadurch gekennzeichnet, dass** der vom Flanschrand (39) des Flanschringes (35) übergriffene Bereich der Ringscheibe (17) eine Vertiefung (23) bildet, deren Tiefe der Stärke des übergreifenden Flanschrandes (39) angepaßt ist.

7. Hydrozylinder nach den Ansprüchen 1 bis 6, **dadurch gekennzeichnet, dass** die Ringscheibe (17) im außerhalb der Vertiefung (23) gelegenen Bereich zumindest eine Durchgangsbohrung (41) aufweist, die an der zugekehrten Endfläche (7) des Kolbens (5) an einer zur zweiten Dichtungsanordnung (31) radial nach innen versetzen Stelle mündet.
